# EUROPÄISCHE PATENTSCHRIFT

(11) **EP 2 487 469 B1**
(45) Veröffentlichungstag und Bekanntmachung des Hinweises auf die Patenterteilung: **07.03.2018**
(21) Anmeldenummer: 12000259.7
(22) Anmeldetag: 18.01.2012
(51) Int. Cl.: G01F 11/00

(54) **DOSIEREINRICHTUNG**
METERING DEVICE
DISPOSITIF DE DOSAGE

(30) Priorität: 11.02.2011 DE 102011011025
(43) Veröffentlichungstag der Anmeldung: 15.08.2012
(73) Patentinhaber: Harro Höfliger Verpackungsmaschinen GmbH, 71573 Allmersbach im Tal (DE)
(72) Erfinder: Weigel, Marco, 71554 Weissach im Tal (DE)
(74) Vertreter: Zurhorst, Stefan

(56) Entgegenhaltungen:
- US-A- 2 919 159
- US-A- 3 380 780
- US-A1- 2010 014 926

## Beschreibung

Die Erfindung betrifft eine Dosiereinrichtung für ein insbesondere feinkörniges Pulver sowie ein Verfahren zum Betrieb einer solchen Dosiereinrichtung.

In zahlreichen technischen Anwendungsfällen gilt es, Pulver in einer bestimmten Menge dosiert abzufüllen. Hierbei kommt es darauf an, dass im Zielbehälter eine definierte Menge mit hoher Wiederholgenauigkeit und Prozesssicherheit eingefüllt wird.

Hierzu sind verschiedene Systeme bekannt, bei denen die Dosierung entweder volumetrisch oder nach Gewicht vorgenommen wird. Der technische Aufwand ist hoch. Zahlreiche mechanisch bewegte Teile sind kostenintensiv in Herstellung und Betrieb und neigen außerdem zum Verschleiß. Verschleißbedingter Abrieb an den Einzelteilen der Dosiereinrichtung kann zu einer Kontaminierung des abzufüllenden Pulvers führen.

Schlecht fließfähige Pulver mit hoher Agglomerationsneigung müssen für den Dosiervorgang fluidisiert werden, was nur mit hohem Aufwand möglich ist. Außerdem kann eine unerwünschte Verdichtung des Pulvers oder bei mehrphasigen Pulvern eine unerwünschte Entmischung eintreten.

Des Weiteren ist es bekannt, zur Förderung des Pulvers einen Gasstrom beispielsweise aus Luft, Edelgas oder dgl. einzusetzen. Die Kontrolle eines solchen pneumatischen Luftstromes ist aber dahingehend schwierig, dass das Pulver am Zielort nicht aufgewirbelt und fortgeblasen wird. Bei technischen Gasen wie Edelgase oder dgl. entsteht ein hoher Gasverbrauch, was zu beträchtlichen Betriebskosten führen kann. Das Gleiche gilt auch beim Einsatz von gekühlten Gasen zum Transport von wärmekritischen Pulvern mit niedrigem Schmelzpunkt wie Fettgranulate oder dgl. Vorrichtungen zum pneumatischen Transport von Pulver mittels intermittierenden Druckpulsen sind beispielsweise aus US2010/0014926 und US 3,380,780 bekannt.

Der Erfindung liegt die Aufgabe zugrunde, eine Dosiereinrichtung für ein insbesondere feinkörniges Pulver mit vereinfachtem Aufbau, hoher Prozesssicherheit, niedrigen Betriebskosten und schonender Behandlung des Pulvers anzugeben.
Diese Aufgabe wird durch eine Dosiereinrichtung mit den Merkmalen des Anspruchs 1 gelöst.
Der Erfindung liegt des Weiteren die Aufgabe zugrunde, ein vereinfachtes, produktschonendes und kostengünstiges Dosierverfahren für Pulver anzugeben.

Diese Aufgabe wird durch ein Verfahren mit den Merkmalen des Anspruchs 10 gelöst. Nach der Erfindung ist eine Dosiereinrichtung für ein Pulver vorgesehen, die einen Vorratsbehälter für das Pulver und einen bezogen auf die Gewichtskraftrichtung unterhalb des Vorratsbehälters angeordneten, entlang einer Längsachse sich erstreckenden Sammelkanal umfasst. Der Vorratsbehälter mündet mittels einer Behältermündung derart in den Sammelkanal, dass ein ungehinderter Durchgangsweg für das Pulver vom Vorratsbehälter zum Sammelkanal gebildet ist. Die Längsachse des Sammelkanals liegt quer zur Gewichtskraftrichtung, wobei der Sammelkanal bezogen auf die Gewichtskraftrichtung unterhalb der Behältermündung einen Kanalboden aufweist. Des Weiteren weist der Sammelkanal eine Austragsöffnung für eine dosierte Teilmenge des Pulvers auf, wobei die Austragsöffnung in Richtung der Längsachse des Sammelkanals seitlich zur Behältermündung versetzt angeordnet ist. Außerdem sind Mittel zur Druckbeaufschlagung des Sammelkanals mit einem pulsierenden Druck vorgesehen.

Im zugehörigen erfindungsgemäßen Verfahren wird eine Teilmenge des Pulvers aus dem Vorratsbehälter durch die Behältermündung hindurch auf den Kanalboden des Sammelkanals gebracht. Zumindest die auf dem Kanalboden liegende Teilmenge des Pulvers wird mittels des pulsierenden Druckes fluidisiert. Das unter Einwirkung des pulsierenden Druckes fluidisierte Pulver fließt entlang des Kanalbodens zur Austragsöffnung und tritt dort aus dem Sammelkanal aus. Der pulsierende Druck wird abgeschaltet, sobald eine gewünschte Menge des Pulvers aus der Austragsöffnung ausgetreten und dadurch dosiert ist.

Nach der Erfindung kann auf mechanisch bewegte Teile vollständig verzichtet werden. Vielmehr wird der Effekt ausgenutzt, dass eine bestimmte, materialbedingte Fließfähigkeit des Pulvers durch Aufbringen eines pulsierenden Druckes erhöht werden kann. Bei fehlendem pulsierendem Druck kann die Fließfähigkeit des Pulvers dazu ausreichen, dass sich eine bestimmte Teilmenge auf dem Kanalboden unterhalb der Behältermündung in Form eines Haufens ansammelt. Die geometrische Abstimmung des Sammelkanals und insbesondere des seitlichen Versatzes der Austragsöffnung zur Behältermündung führt aber dazu, dass das Pulver nicht eigenständig durch den quer zur Gewichtskraftrichtung liegenden Sammelkanal zur Austragsöffnung fließt und dort austritt.

Sobald aber der Sammelkanal und damit zumindest die dort angesammelte Teilmenge des Pulvers mit dem pulsierenden Druck beaufschlagt wird, findet eine Fluidisierung des Pulvers derart statt, dass seine Fließfähigkeit gegenüber dem Ruhezustand erhöht ist und ausreicht, dass das Pulver entlang des Kanalbodens zur Austragsöffnung fließt und dort austritt. Sobald aber der pulsierende Druck wieder abgeschaltet wird, hört die druckpulsationsbedingte Fluidisierung des Pulvers unmittelbar auf, womit auch der Fließvorgang unmittelbar unterbrochen wird. Dies erlaubt in einfacher Weise eine präzise Steuerung bzw. Regelung der aus der Austragsöffnung austretenden Pulvermenge, womit eine exakte Dosierung des Pulvers möglich ist.

Bewegung und Dosierung des Pulvers erfolgen allein durch das Anliegen des pulsierenden Druckes, so dass auf mechanisch bewegte Teile vollständig verzichtet werden kann. Die erfindungsgemäße Dosiereinrichtung kann damit sehr einfach im Aufbau sein, was zu sehr geringen Investitionskosten führt. Wartungs- und Reinigungsaufwand sind auf ein Minimum reduziert. Der simple und kostengünstige Aufbau erlaubt sogar eine Ausgestaltung als "Einmaldosierkopf" für den Einsatz einer bestimmten Pulvercharge mit anschließender Entsorgung des Dosierkopfes. Reinigung, Validierung oder dgl. entfallen. Außerdem ist ohne weiteres ein Einsatz in der Sterilfertigung möglich.
Das zu dosierende Pulver selbst ist keinen mechanisch bewegten Teilen ausgesetzt und unterliegt damit nicht der Gefahr der Kontamination durch Abrieb oder dgl. Außerdem entfällt eine unerwünschte Verdichtung und/oder Entmischung des Pulvers.
Bei schwer fließfähigen Pulversorten, die insbesondere aufgrund einer ausgeprägten Feinkörnigkeit eine hohe Agglomerationsneigung aufweisen, kann die Anordnung von mechanischen Hilfsmitteln im Bereich des Vorratsbehälters und der Behältermündung beispielsweise in Form von Rührwerken, Schwingungsanregern oder dgl. zweckmäßig sein. Hierdurch können auch schlecht fließfähige Pulver aus dem Vorratsbehälter in den Sammelkanal gebracht werden, wo sie dann in erfindungsgemäßer Weise fluidisiert und dosiert werden. Sofern aber Pulver mit hinreichender eigenständiger Fließfähigkeit eingesetzt werden, wird vorteilhaft auf die vorgenannten mechanischen Hilfsmittel verzichtet, so dass das Pulver bei abgeschaltetem pulsierenden Druck insbesondere allein in Folge seiner Gewichtskraft aus dem Vorratsbehälter durch die Behältermündung auf den Kanalboden des Sammelkanals fließt. Bei weiter vereinfachtem Aufbau der Anordnung wird sich ein selbststeuernder Effekt zunutze gemacht. Bei abgeschaltetem pulsierendem Druck fließt zwar Pulver aus dem Vorratsgehälter auf den Boden des Sammelkanals. Da er aber aufgrund der quer zur Gewichtskraft liegenden Ausrichtung des Sammelkanals ohne anliegenden pulsierenden Druck seitlich nicht wegfließen kann, staut sich das Pulver in begrenzter Menge auf, ohne dass neues Pulver nachfließen kann. Erst wenn der pulsierende Druck eingeschaltet wird, erfolgt das selbsttätige Abfließen des fluidisierten Pulvers zur Austragsöffnung.

Die Austragsöffnung ist einem atmosphärischem Druck beaufschlagt. Die Mittel zur Druckbeaufschlagung sind derart ausgelegt, dass der pulsierende Druck zwischen einem Druckmaximum und einem Druckminimum schwingt, wobei das Druckmaximum oberhalb des Umgebungsdrucks bzw. des atmosphärischen Druckes liegt, und wobei das Druckminimum unterhalb des Umgebungsdrucks bzw. des atmosphärischen Druckes liegt. Hierdurch ist sichergestellt, dass vergleichsweise hohe Druckamplituden auf das Pulver im Sammelkanal einwirken, während sich der Mitteldruck des pulsierenden Druckes - wenn überhaupt - allenfalls nur geringfügig vom atmosphärischen Druck unterscheidet. Hierdurch wird erreicht, dass das Pulver zumindest vorrangig in Folge seines fluidisierten Zustandes unter den einwirkenden Gewichtskräften aus der Austragsöffnung austritt, während sich in Folge einer gemittelten Druckdifferenz ein allenfalls geringer, über die Amplituden gemittelter Gasstrom ausbildet. Der Gasdurchsatz ist gering, weshalb neben Luft ohne Weiteres auch kostenintensive technische Gase wie Stickstoff, Argon oder dgl. und/oder auch gekühlte Gase mit dem pulsierenden Druck eingesetzt werden können.

In einer vorteilhaften Ausführungsform sind die Mittel zur Druckbeaufschlagung derart ausgelegt, dass der Mitteldruck des pulsierenden Druckes gleich dem atmosphärischen Druck ist. In diesem Fall beschränkt sich die Wirkung des pulsierenden Druckes allein auf die Fluidisierung in Folge der einwirkenden Druckamplituden. Ein gemittelter Gasstrom (Nettogasstrom) tritt praktisch nicht auf. Das dosierte Pulver fällt allein durch seine Gewichtskraft aus der Austrittsöffnung in den Zielbehälter. Durch das Fehlen eines ebenfalls aus der Austrittsöffnung austretenden Nettogasstromes wird vermieden, dass das im Zielbehälter befindliche Pulver aufgewirbelt und fortgeblasen wird.

Alternativ kann es zweckmäßig sein, dass der Mitteldruck des pulsierenden Druckes oberhalb des atmosphärischen Druckes liegt. Hierbei entsteht dann ein über die Amplituden gemittelter Gasstrom, der unterstützend auf das Abfließen des fluidisierten Pulvers vom Kanalboden zur Austragsöffnung hin einwirken kann. Außerdem können hierdurch Leckageverluste bei technischen Gasen ausgeglichen und eine zuverlässige Luftverdrängung herbeigeführt werden. Aufgrund der eingangs beschriebenen Bemessung der wirkenden Amplituden bleibt aber der Vorgang der Fluidisierung und des gewichtskraftbedingten Abfließens des fluidisierten Pulvers gegenüber der Einwirkung des nur schwach ausgebildeten Nettogasstromes dominant. Das Pulver wird nicht aufgewirbelt. Der Gasverbrauch ist gering, so dass auch teuere technische Gase mit hoher Effizienz eingesetzt werden können. Der im Vergleich zum atmosphärischen Druck erhöhte, also positive Mitteldruck stellt sicher, dass das fluidisierte Pulver nur an der vorgesehenen Austragsöffnung austritt. Im Gegensatz zu einem negativen Mitteldruck im Saugbetrieb kann auf aufwendige Filtermaßnahmen oder andere Maßnahmen zur Pulverrückhaltung verzichtet werden.

Die eingangs getroffene Definition, demnach die Längsachse des Sammelkanals quer zur Gewichtskraftrichtung liegt, bedeutet nicht notwendigerweise, dass die Längsachse exakt horizontal ausgerichtet sein muss. Vielmehr darf die Längsachse des Sammelkanals auch eine definierte Neigung zur Horizontalen aufweisen, die aber nur so groß ist, dass das Pulver ohne einwirkende Druckimpulse nicht selbsttätig entlang des Kanalbodens zur Austragsöffnung fließt. Hierzu hat sich als zweckmäßig herausgestellt, dass die Längsachse des Sammelkanals nicht mehr als 30°, bevorzugt nicht mehr als 15° zur Horizontalen geneigt ist und insbesondere zumindest näherungsweise horizontal ausgerichtet ist. Bei einer horizontalen Ausrichtung erfolgt die Abfuhr des fluidisierten Pulvers allein durch seine erhöhte Fließfähigkeit. Unterstützend kann aber auch eine bestimmte Neigung insbesondere innerhalb des vorgenannten Winkelbereiches zweckmäßig sein. Bei einer Neigung in Austragsrichtung wird das Abfließen des Pulvers zur Austragsöffnung unterstützt. Gleichzeitig ist hierdurch vermieden, dass das fluidisierte Pulver in der entgegengesetzten Richtung zur Einspeisung des pulsierenden Druckes hin fließt. Alternativ kann eine Neigung des Sammelkanals bzw. seines Kanalbodens entgegen der Austragsrichtung zweckmäßig sein. Dies unterstützt die sofortige und unmittelbare Abschaltwirkung auf den Austragsvorgang, sobald der pulsierende Druck abgeschaltet wird. Ein unerwünschtes, die Dosiergenauigkeit herabsetzendes Nachrieseln des Pulvers im Anschluss an die Druckabschaltung ist vermieden.

Der Sammelkanal weist einen Druckanschluss für die Einspeisung des pulsierenden Druckes auf. Vorteilhaft ist zwischen der Behältermündung und dem Druckanschluss eine Pulversperre, insbesondere in Form eines Siebes, eines Filters oder dgl. angeordnet. Hierdurch wird vermieden, dass das in Folge seiner Fluidisierung fließfähige Pulver in den Bereich der Druckeinspeisung bzw. zum Druckanschluss gelangt.

Die erfindungsgemäße Dosiereinrichtung und das erfindungsgemäße Verfahren erlauben in sehr einfacher Weise eine hinreichend exakte Dosierung des Pulvers durch einfache Steuerung- bzw. Regelungsmaßnahmen. Zur Realisierung einer geeigneten Steuerung bzw. Regelung der Dosiermenge des Pulvers auf einen Zielwert ist zweckmäßig ein Sensor zur Massenerfassung des austretenden Pulvers in dessen Fließweg, insbesondere in einem Austrittskanal des Sammelkanals angeordnet. Vorteilhaft erfolgt die Dosierung des Pulvers durch Steuerung oder Regelung der Einwirkzeit des pulsierenden Druckes. Alternativ oder zusätzlich kann die Dosierung des Pulvers durch Steuerung oder Regelung einer Anzahl von Amplituden des pulsierenden Druckes erfolgen. In jedem Fall ist der Steuerungs- bzw. Regelungsaufwand bei hoher Prozesssicherheit und Wiederholgenauigkeit gering.

Ausführungsbeispiele der Erfindung sind nachfolgend anhand der Zeichnung näher beschrieben. Es zeigen:
- Fig. 1: in einer schematischen Längsschnittdarstellung eine erfindungsgemäß ausgeführte Dosiereinrichtung mit einem im Sammelkanal anliegenden pulsierenden Druck;
- Fig. 2: in einer schematischen Diagrammdarstellung den Druckverlauf im Sammelkanal nach Fig. 1 mit einem positiven Mitteldruck;
- Fig. 3: eine Variante des Druckverlaufs nach Fig. 2 mit einem Mitteldruck, der gleich dem atmosphärischen Druck ist;
- Fig. 4: den Druckverlauf nach Fig. 3 über einen längeren Zeitraum, demnach der pulsierende Druck in einzelnen Pulsfolgen aufgebracht wird.

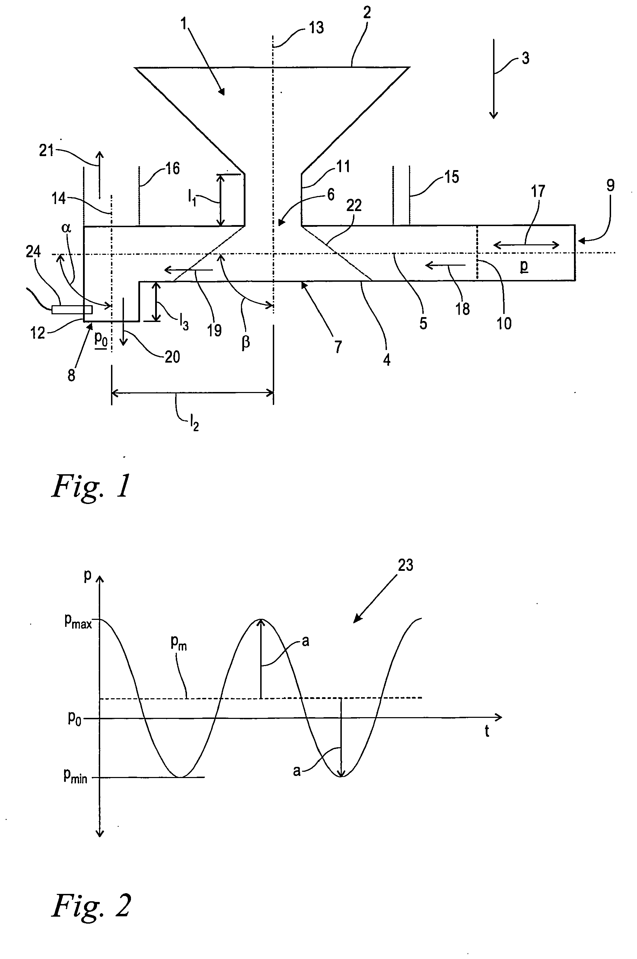

Fig. 1 zeigt in schematischer Längsschnittdarstellung ein Ausführungsbeispiel der erfindungsgemäßen Dosiereinrichtung. Die Dosiereinrichtung ist im betriebsfertigen Zustand relativ zu der durch einen Pfeil angegebenen Gewichtskraftrichtung 3 dargestellt und umfasst einen Vorratsbehälter 2 sowie einen bezogen auf die Gewichtskraftrichtung 3 unterhalb des Vorratsbehälters 2 angeordneten Sammelkanal 4. Der Sammelkanal 4 erstreckt sich entlang einer Längsachse 5, wobei die Längsachse 5 quer zur Gewichtskraftrichtung 3 liegt. Im gezeigten Ausführungsbeispiel ist die Längsachse 5 zumindest näherungsweise horizontal, also rechtwinklig zur Gewichtskraftrichtung 3 ausgerichtet. Es kann aber auch eine definierte Neigung der Längsachse 5 vorteilhaft von bis zu und einschließlich 30° zur Horizontalen, entsprechend einem Winkel von bis einschließlich 120° zur Gewichtskraftrichtung 3 und insbesondere von bis zu und einschließlich 15° zur Horizontalen, entsprechend einem Winkel von bis einschließlich 105° zur Gewichtskraftrichtung 3 zweckmäßig sein.

Der Vorratsbehälter 2 mündet mittels einer Behältermündung 6 in den Sammelkanal 4. Hierzu kann der Vorratsbehälter 2 direkt am Sammelkanal 4 angebracht sein. Im gezeigten Ausführungsbeispiel ist zwischen dem Vorratsbehälter 2 und der Behältermündung 6 ein optionaler Verbindungskanal 11 mit einer Länge l₁ angeordnet. Der Vorratsbehälter 2 und auch der optionale Verbindungskanal 11 weisen eine Längsachse 13 auf, die parallel zur Gewichtskraftrichtung 3 ausgerichtet ist und in einem Winkel β = 90° zur Längsachse 5 des Sammelkanals 4 liegt. Der Winkel β kann aber auch einen abweichenden Betrag aufweisen. Insbesondere kann es zweckmäßig sein, dass die Längsmittelachse 13 des Vorratsbehälters 2 und des Verbindungskanals 11 gegenüber der Gewichtskraftrichtung 3 geneigt ist.

Der Sammelkanal 4 weist bezogen auf die Gewichtskraftrichtung 3 unterhalb der Behältermündung 6 einen Kanalboden 7 auf, der parallel zur Längsachse 5 des Sammelkanals 4 liegt, und für den die oben beschriebenen Bedingungen für einen Neigungswinkel gelten. Darüber hinaus ist der Sammelkanal 4 mit einer Austragsöffnung 8 versehen, die in Richtung der Längsachse 5 seitlich zur Behältermündung 6 um eine Länge l₂ versetzt angeordnet ist. In der Gewichtskraftrichtung 3 liegt also die Austragsöffnung 8 nicht in Überdeckung mit der Behältermündung 6. Die Austragsöffnung 8 kann direkt seitlich angrenzend an den Kanalboden 7 angeordnet sein. Im gezeigten Ausführungsbeispiel geht der Sammelkanal 4 in einen Austrittskanal 12 mit einer Längsachse 14 und mit einer Länge l₃ über, wobei die Austragsöffnung 8 am unteren Ende des Austrittskanals 12 angeordnet ist. Die Längsachse 14 des Austrittskanals 12 ist vertikal, also parallel zur Gewichtskraftrichtung 3 angeordnet und liegt damit in einem Winkel α = 90° zur Längsachse 5 des Sammelkanals 4. Der Winkel α kann aber auch einen abweichenden Betrag aufweisen. Für den Winkel α gelten die gleichen Bedingungen wie für den Winkel β.

An seinem der Austragsöffnung 8 gegenüberliegenden Ende ist der Sammelkanal 4 mit einem Druckanschluss 9 versehen, mittels dessen der Innenraum des Sammelkanals 4 mit einem pulsierenden Druck p beaufschlagt werden kann.

Die gezeigte Dosiereinrichtung ist zum Dosieren eines Pulvers 1 vorgesehen, welches im Vorratsbehälter 2 bevorratet wird. Die Behältermündung 6 und der optionale Verbindungskanal 11 sind derart ausgestaltet, dass ein ungehinderter Druckgangsweg für das Pulver 1 vom Vorratsbehälter 2 durch den Verbindungskanal 11 und die Behältermündung 6 hindurch zum Sammelkanal 4 hin gebildet ist. Der ungehinderte Durchgangsweg bedeutet hier, dass keine mechanisch betätigten Sperren, Ventile, Schleusen oder dgl. vorgesehen sind. Allerdings kann es zweckmäßig sein, bei der Dosierung eines schlecht fließfähigen Pulvers 1 im Vorratsbehälter 2 und/oder im Verbindungskanal 11 Fluidisierhilfen für das Pulver 1 beispielsweise in Form von Rührwerken, Vibrationseinrichtungen (elektrisch, pneumatisch, mechanisch) oder dgl. einzusetzen. Bei der hier gezeigten bevorzugten Ausführungsform für eigenständig gut fließfähige Pulver, wie beispielsweise Zinkpulver für die Dosierung und Befüllung von elektrischen Zellen (Batterien) wird auf solche Hilfsmittel verzichtet, wobei das Pulver 1 bei abgeschaltetem pulsierenden Druck p allein in Folge seiner Gewichtskraft aus dem Vorratsbehälter 2 heraus durch den Verbindungskanal 11 und die Behältermündung 6 hindurch auf den Kanalboden 7 des Sammelkanals 4 fließt.

In jedem Fall bildet sich bei abgeschaltetem pulsierenden Druck p auf dem Kanalboden 7 ein Haufen 22 des Pulvers 1 aus, dessen Böschungswinkel von der Fließfähigkeit des Pulvers abhängt, und der hier schematisch mit seinen geneigten Böschungsflächen durch gestrichelte Linien angedeutet ist.

Die geometrische Ausgestaltung der Dosiereinrichtung, und insbesondere die Auswahl der Längen l₁, l₂, l₃, der Winkel α, β sowie der Querschnittsformen und Querschnittsflächen von Sammelkanal 4, Verbindungskanal 11 und Austrittskanal 12 sind derart auf das eigenständige Fließverhalten des Pulvers 1 ohne Einwirkung des pulsierenden Druckes p und der sich dadurch ausbildenden natürlichen Böschungswinkel des Haufens 22 abgestimmt, dass der Haufen 22 vollständig auf dem Kanalboden 7 zu liegen kommt, nicht durch die Austragsöffnung 8 abfließt und zunächst ein weiteres Nachfließen von Pulver 1 aus dem Vorratsbehälter 2 verhindert.

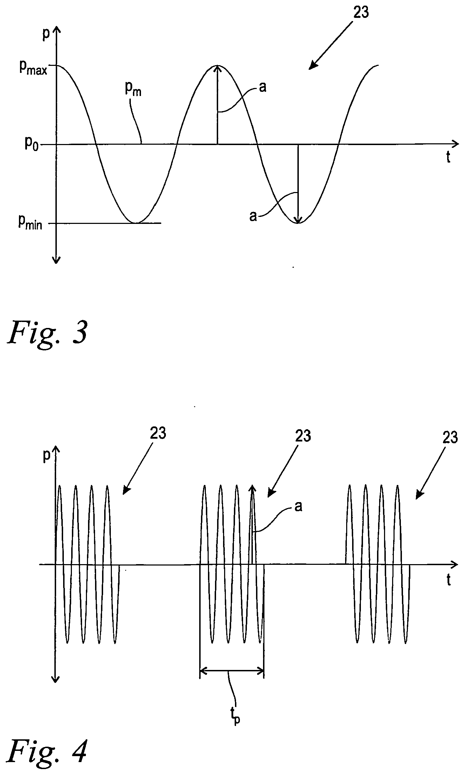

Für die Dosierung des Pulvers 1 wird nun zumindest die auf dem Kanalboden 7 des Sammelkanals 4 in Form des Haufens 22 liegende Teilmenge des Pulvers 1 mittels des pulsierenden Druckes p fluidisiert. Zunächst wird auf verschiedene mögliche Druckverläufe des pulsierenden Druckes p nach den Figuren 2 und 3 eingegangen.

Fig. 2 zeigt in einer Diagrammdarstellung den Druckverlauf des pulsierenden Druckes p über einen kurzen, vergrößert dargestellten Ausschnitt einer Pulsfolge 23 über der Zeit t. Demnach ist hier beispielhaft ein etwa sinusförmiger Verlauf des Druckes p mit einem Mitteldruck pₘ und davon ausgehenden Amplituden a vorgesehen. Die Frequenz und die Amplituden a sind entlang einer einzelnen Pulsfolge 23, von der hier nur ein Ausschnitt dargestellt ist, konstant gewählt. Es kann aber auch ein abweichender, modulierter Druckverlauf zweckmäßig sein.

An der Austragsöffnung 8 (Fig. 1) liegt der atmosphärische Druck p₀ an. Aus Fig. 2 ergibt sich, dass der Mitteldruck pₘ größer ist als der atmosphärische Druck p₀. Allerdings ist die Differenz zwischen dem Mitteldruck pₘ und dem atmosphärischen Druck p₀ deutlich geringer als der Betrag der Amplituden a, so dass sich bei positiven Amplituden a ein Druckmaximum pₘₐₓ oberhalb des atmosphärischen Druckes p₀ und bei negativen Amplituden a ein Druckminimum pₘᵢₙ unterhalb des atmosphärischen Druckes p₀ ausbildet.

Fig. 3 zeigt eine Variante des Druckverlaufes nach Fig. 2, demnach es auch zweckmäßig sein kann, dass der Mitteldruck pₘ zumindest näherungsweise gleich dem atmosphärischen Druck p₀. In den übrigen Merkmalen und Bezugszeigen stimmt die Pulsfolge 23 nach Fig. 3 mit derjenigen nach Fig. 2 überein.

Der Sammelkanal 4 ist im gezeigten Ausführungsbeispiel nach Fig. 1 neben dem Haufen 22 des Pulvers 1 mit Luft befüllt. Anstelle von Luft kann aber auch ein technisches Gas und insbesondere ein Inertgas vorgesehen sein. Für bestimmte Pulver 1 eignen sich Stickstoff, Argon oder dgl. Das Gas hat bevorzugt Raumtemperatur. Bei bestimmten Pulvern 1 mit niedrigem Schmelzpunkt wie Fettgranulate oder dgl. kann auch ein gekühltes Gas zweckmäßig sein. Natürlich ist auch eine Temperatur des Gases oberhalb der Raumtemperatur möglich. Nicht dargestellte Mittel erzeugen den pulsierenden Druck p nach den Figuren 2 oder 3 in üblicher und an sich vorbekannter Weise, so dass diese Mittel zur Erzeugung des pulsierenden Druckes nicht näher dargestellt und beschrieben sind.

Der pulsierende Druck p wird durch den Druckanschluss 9 in den Sammelkanal 4 eingespeist, so dass sich im Gas innerhalb des Sammelkanals 4 eine longitudinale Druckschwingung entsprechend einem Doppelpfeil 17 einstellt. Sofern der Mitteldruck pₘ nach Fig. 2 größer ist als der atmosphärische Druck p₀ an der Austragsöffnung 8, überlagert die vorgenannte Druckschwingung nach dem Doppelpfeil 17 außerdem eine Gasströmung vom Druckanschluss 9 zur Austragsöffnung 8 entsprechend einem Pfeil 18, wobei der gemittelte Nettogasstrom entsprechend dem Pfeil 18 aber klein ist im Vergleich zur longitudinal pulsierenden Gasbewegung entsprechend dem Doppelpfeil 17.

Der Haufen 22 des Pulvers 1 wird mit dem pulsierenden Druck p beaufschlagt und dadurch fluidisiert. Seine Fließfähigkeit wird derart gesteigert, dass sich der Haufen 22 mit seinen durch gestrichelte Linien dargestellten Böschungen auflöst und entlang des Kanalbodens 7 fließt. Gleichzeitig fließt auch weiteres Pulver 1 aus dem Vorratsbehälter 2 auf den Kanalboden 7 unterhalb der Behältermündung 6 nach. Da der pulsierende Druck p auch auf die Behältermündung 6 einwirkt, wird hierdurch das Nachfließen aus dem Vorratsbehälter 2 unterstützt.

Ein Teil des fluidisierten Pulvers 1 kann entlang des Kanalbodens 7 - sofern vorhanden auch entgegen dem Gasstrom nach dem Pfeil 18 - zum Druckanschluss 9 hin fließen. Zur Vermeidung dieses unerwünschten Effektes ist zwischen der Behältermündung 6 und dem Druckanschluss 9 eine Pulversperre 10 angeordnet. Die Pulversperre 10 kann in Form eines Siebes, eines Filters oder dgl. ausgestaltet sein. Alternativ oder zusätzlich kann mit gleicher Wirkung auch eine Neigung der Längsachse 5 des Sammelkanals 4 vorgesehen sein, die zur Austragsöffnung 8 hin abfällt. Außerdem kann es zweckmäßig sein, den Nettogasstrom entsprechend dem Pfeil 18 durch Ausbildung eines hinreichend hohen Mitteldruckes pₘ (Figuren 2, 3) in einem Betrag auszubilden, der ein Fließen des Pulvers 1 in Richtung des Druckanschlusses 9 verhindert.

Im jedem Fall fließt aber auch das auf dem Kanalboden 7 gesammelte und fluidisierte Pulver entsprechend einem Pfeil 19 in der entgegengesetzten Richtung, nämlich zur Austragsöffnung 8 hin, und tritt dort entsprechend einem Pfeil 20 aus dem Sammelkanal 4 aus. Dieses Austreten des Pulvers 1 aus der Austragsöffnung 8 findet in Folge der gesteigerten Fließfähigkeit als Folge der Fluidisierung durch den pulsierenden Druck p auch dann statt, wenn kein Nettogasstrom entsprechend dem Pfeil 18 vorhanden ist. Der Austragsmechanismus des Pulvers 1 ist also vorrangig durch die Amplituden a (Figuren 2, 3) und allenfalls nur unterstützend durch den im Betrag vergleichsweise gering erhöhten Mitteldruck pₘ herbeigeführt.

Sobald der pulsierende Druck p abgeschaltet wird, hört die Fluidisierung des Pulvers 1 unmittelbar und verzögerungsfrei auf, so dass sich unmittelbar wieder der Haufen 22 nach Fig. 1 einstellt, ohne dass weiteres Pulver 1 entsprechend den Pfeilen 19,20 aus der Austragsöffnung 8 austritt. Durch Einschalten des pulsierenden Druckes p wird also der Austritt des Pulvers 1 aus der Austragsöffnung 8 in einen nicht dargestellten Zielbehälter unmittelbar in Gang gesetzt. Sobald die gewünschte Zielmenge des Pulvers 1 aus der Austragsöffnung 8 ausgetreten ist, wird der pulsierende Druck p und damit der Pulvereintrag in den Zielbehälter ausgeschaltet, womit das Pulver 1 präzise in seiner Menge dosiert ist.

Sofern eine Neigung der Längsachse 5 des Sammelkanals 4 im eingangs erwähnten Rahmen vorgesehen ist, kann diese Neigung so gewählt werden, dass die Längsachse 5 bzw. der Kanalboden 7 in Richtung einer Austragsöffnung 8 des Sammelkanals 4 abfällt bzw. abschüssig ist und dadurch ein Abfließen des Pulvers 1 zur Austragsöffnung 8 unterstützt. Alternativ kann eine entgegengesetzte Neigung der Längsachse 5 bzw. des Kanalbodens 7 vorteilhaft sein, bei der die Längsachse 5 bzw. der Kanalboden 7 zur Austragsöffnung 8 hin ansteigt und dadurch ein Nachrieseln des Pulvers 1 aus der Austragsöffnung 8 bei abgeschaltetem pulsierenden Druck p verhindert.

Fig. 4 zeigt in einer schematischen Diagrammdarstellung eine Aneinanderreihung einzelner Pulsfolgen 23, von denen ein Ausschnitt in Fig. 3 dargestellt ist. Das nachfolgend Beschriebene gilt in gleicher Weise aber auch für Pulsfolgen 23 mit einem Druckverlauf nach Fig. 2. Jede einzelne Pulsfolge 23 weist eine bestimmte Anzahl von Amplituden a sowie eine bestimmte zeitlichen Pulsfolgenlänge tₚ auf. Sofern das Fließverhalten des Pulvers 1 mit und ohne Beaufschlagung durch den pulsierenden Druck p bekannt und eine geometrische Abstimmung der Dosiereinrichtung (Fig. 1) darauf erfolgt ist, erfolgt die Dosierung des Pulvers 1 entsprechend der Darstellung nach Fig. 4 durch Steuerung oder Regelung der Einwirkzeit t des pulsierenden Druckes p, namentlich der Pulsfolgenlänge tₚ und/oder durch Steuerung oder Regelung der Anzahl der Amplituden a innerhalb einer Pulsfolge 23 bzw. innerhalb der Pulsfolgenlänge tₚ. Äquivalent zur vorgenannten Steuerung oder Regelung der Anzahl der Amplituden a ist eine Steuerung oder Regelung einer Anzahl von Schwingungsperioden des Druckes p innerhalb einer Pulsfolge 23 bzw. innerhalb der Pulsfolgenlänge tₚ, wobei der Druck p innerhalb einer Schwingungsperiode zwei Amplituden a, namentlich je eine positive und je eine negative Amplitude a durchläuft. Der zeitliche Abstand zwischen zwei nachfolgenden positiven oder negativen Amplituden a entspricht also einer Schwingungsperiode. Bei der Steuerung oder Regelung kann ein weiter unten näher beschriebener Sensor 24 nach Fig. 1 einbezogen werden. Jeder einzelnen entsprechend ausgestalteten Pulsfolge 23 entspricht demnach eine exakt dosierte bzw. bemessene Teilmenge des Pulvers 1, die nach Fig. 1 aus der Austragsöffnung 8 ausgetreten und in den nicht dargestellten Zielbehälter eingefüllt ist. Zwischen den einzelnen Pulsfolgen 23 nach Fig. 4 liegen Leerzeiten, innerhalb derer ein jeweils befüllter Zielbehälter gegen einen neuen, leeren und im Anschluss daran zu befüllenden Zielbehälter ausgetauscht werden kann.

Zur Unterstützung des vorgenannten Steuerungs- oder Regelungsvorganges, zur Erzielung eines tatsächlichen Zielwertes und/oder Überprüfung der tatsächlichen Dosiermenge des Pulvers 1 kann optional ein Sensor 24 zur Massenerfassung des austretenden Pulvers 1 vorgesehen sein. Dieser ist in Fig. 1 schematisch dargestellt und im Fließweg des mittels des pulsierenden Druckes p fluidisierten Pulvers 1 angeordnet. Geeignete Stellen zur Anordnung des Sensors 24 können die Behälteröffnung 6 oder der Sammelkanal 4 insbesondere im Bereich seines Kanalbodens 7 sein. Im gezeigten Ausführungsbeispiel nach Fig. 1 ist der Sensor 24 im Austrittskanal 12 des Sammelkanals 4 angeordnet und erfasst dort die austretende Menge des mittels des pulsierenden Druckes p fluidisierten Pulvers 1. Der Sensor 24 ist mit einer nicht dargestellten Steuerungs- bzw. Regelungseinheit verbunden. Es kann ausreichen, den Sensor 24 allein zur prüfenden Erfassung, insbesondere zur hundertprozentigen Erfassung der jeweils ausgetragenen Pulvermenge während des laufenden Dosiervorganges einzusetzen. Bevorzugt ist der Sensor 24 über die vorgenannte Regelungseinheit mit den Mitteln zur Druckbeaufschlagung des Sammelkanals 4 zu einem die Dosiermenge des Pulvers 1 auf einen Zielwert einregelnden Regelkreis zusammengeschaltet.

Nach Fig. 1 ist zwischen der Behältermündung 6 und dem Druckanschluss 9 bzw. der Pulversperre 10 noch optional ein Bypass 15 angeordnet, der in den Sammelkanal 4 mündet. Hierdurch kann beispielsweise eine Inertisierung der Gasfüllung des Sammelkanals 4 erfolgen. Ebenfalls optional zweigt vom Sammelkanal 4 insbesondere gegenüber der Austragsöffnung 8 noch ein Anschluss 16 ab. Hierdurch kann beispielsweise in einem solchen Fall Gas aus dem Sammelkanal 4 abgesaugt werden, in dem ein Nettogasstrom entsprechend dem Pfeil 18 eingestellt ist. Hierdurch wird sichergestellt, dass das Pulver 1 entsprechend dem Pfeil 20 ohne Begleitung eines nennenswerten Gasstromes aus der Austragsöffnung 8 in den Zielbehälter geleitet wird, ohne dabei aufgewirbelt zu werden. Nach Bedarf kann hier ebenfalls eine nicht dargestellte Pulversperre entsprechend der Pulversperre 10 in Form eines Filters, Siebes oder dgl. eingesetzt werden. Außerdem ist durch den Anschluss 16 hindurch, eine Füllstandskontrolle eine Sauerstoffgehaltskontrolle oder dgl. möglich.

## Patentansprüche

1. Dosiereinrichtung für ein Pulver (1), umfassend einen Vorratsbehälter (2) für das Pulver (1) und einen in Gewichtskraftrichtung (3) unterhalb des Vorratsbehälters (2) angeordneten, entlang einer Längsachse (5) sich erstreckenden Sammelkanal (4), wobei der Vorratsbehälter (2) derart mittels einer Behältermündung (6) in den Sammelkanal (4) mündet, dass ein ungehinderter Durchgangsweg für das Pulver (1) vom Vorratsbehälter (2) zum Sammelkanal (4) gebildet ist, wobei die Längsachse (5) des Sammelkanals (4) quer zur Gewichtskraftrichtung (3) liegt, wobei der Sammelkanal (4) in Gewichtskraftrichtung (3) unterhalb der Behältermündung (6) einen Kanalboden (7) aufweist, wobei der Sammelkanal (4) eine Austragsöffnung (8) für eine dosierte Teilmenge des Pulvers (1) aufweist, wobei die Austragsöffnung (8) in Richtung der Längsachse (5) des Sammelkanals (4) seitlich zur Behältermündung (6) versetzt angeordnet ist, und wobei Mittel zur Druckbeaufschlagung des Sammelkanals (4) mit einem pulsierenden Druck (p) vorgesehen sind,
**dadurch gekennzeichnet, dass** die Austragsöffnung (8) mit einem atmosphärischen Druck (p₀) beaufschlagt ist, und dass die Mittel zur Druckbeaufschlagung derart ausgelegt sind, dass der pulsierende Druck (p) zwischen einem Druckmaximum (pₘₐₓ) und einem Druckminimum (pₘᵢₙ) schwingt, wobei das Druckmaximum (pₘₐₓ) oberhalb des atmosphärischen Druckes (p₀) liegt, und wobei das Druckminimum (pₘᵢₙ) unterhalb des atmosphärischen Druckes (p₀) liegt.

2. Dosiereinrichtung nach Anspruch 1,
**dadurch gekennzeichnet, dass** die Mittel zur Druckbeaufschlagung derart ausgelegt sind, dass ein Mitteldruck (pₘ) des pulsierenden Druckes (p) gleich dem atmosphärischen Druck (p₀) ist.

3. Dosiereinrichtung nach Anspruch 1,
**dadurch gekennzeichnet, dass** die Mittel zur Druckbeaufschlagung derart ausgelegt sind, dass ein Mitteldruck (pₘ) des pulsierenden Druckes (p) oberhalb des atmosphärischen Druckes (p₀) liegt.

4. Dosiereinrichtung nach einem der Ansprüche 1 bis 3,
**dadurch gekennzeichnet, dass** der Sammelkanal (4) mit Luft unter Einwirkung des pulsierenden Druckes (p) beaufschlagt ist.

5. Dosiereinrichtung nach einem der Ansprüche 1 bis 3,
**dadurch gekennzeichnet, dass** der Sammelkanal (4) mit einem technischen Gas, insbesondere mit einem Inertgas unter Einwirkung des pulsierenden Druckes (p) beaufschlagt ist.

6. Dosiereinrichtung nach einem der Ansprüche 1 bis 5,
**dadurch gekennzeichnet, dass** die Längsachse (5) des Sammelkanals (4) nicht mehr als 30°, bevorzugt nicht mehr als 15° zur Horizontalen geneigt ist und insbesondere zumindest näherungsweise horizontal ausgerichtet ist.

7. Dosiereinrichtung nach einem der Ansprüche 1 bis 6,
**dadurch gekennzeichnet, dass** der Sammelkanal (4) einen Druckanschluss (9) für die Einspeisung des pulsierenden Druckes (p) aufweist, wobei zwischen der Behältermündung (6) und dem Druckanschluss (9) eine Pulversperre (10) insbesondere in Form eines Siebes, eines Filters oder dgl. angeordnet ist.

8. Dosiereinrichtung nach einem der Ansprüche 1 bis 7,
**dadurch gekennzeichnet, dass** im Fließweg des mittels des pulsierenden Druckes (p) fluidisierten Pulvers (1), insbesondere in einem Austrittskanal (12) des Sammelkanals (4) ein Sensor (24) zur Massenerfassung des austretenden Pulvers (1) angeordnet ist.

9. Dosiereinrichtung nach Anspruch 8,
**dadurch gekennzeichnet, dass** der Sensor (24) mit den Mitteln zur Druckbeaufschlagung des Sammelkanals (4) zu einem die Dosiermenge des Pulvers (1) auf einen Zielwert einregelnden Regelkreis zusammengeschaltet ist.

10. Verfahren zum Betrieb einer Dosiereinrichtung nach einem der Ansprüche 1 bis 9 für die Dosierung von Pulver (1), umfassend folgende Verfahrensschritte:
- Eine Teilmenge des Pulvers (1) wird aus dem Vorratsbehälter (2) durch die Behältermündung (6) auf den Kanalboden (7) des Sammelkanals (4) gebracht;
- die Austragsöffnung (8) wird mit einem atmosphärischen Druck (p₀) und der Sammelkanal (4) mit einem pulsierenden Druck (p) beaufschlagt, wobei der pulsierende Druck (p) im Sammelkanal (4) zwischen einem Druckmaximum (pₘₐₓ) und einem Druckminimum (pₘᵢₙ) schwingt, wobei das Druckmaximum (pₘₐₓ) oberhalb des atmosphärischen Druckes (p₀) liegt, und wobei das Druckminimum (pₘᵢₙ) unterhalb des atmosphärischen Druckes (p₀) liegt;
- zumindest die auf dem Kanalboden (7) des Sammelkanals (4) liegende Teilmenge des Pulvers (1) wird mittels des pulsierenden Druckes (p) fluidisiert;
- das unter Einwirkung des pulsierenden Druckes (p) fluidisierte Pulver (1) fließt entlang des Kanalbodens (7) zur Austragsöffnung (8) und tritt dort aus dem Sammelkanal (4) aus;
- der pulsierende Druck (p) wird abgeschaltet, sobald eine gewünschte Menge des Pulvers (1) aus der Austragsöffnung (8) ausgetreten und dadurch dosiert ist.

11. Verfahren nach Anspruch 10,
**dadurch gekennzeichnet, dass** das Pulver (1) bei abgeschaltetem pulsierenden Druck (p) insbesondere allein in Folge seiner Gewichtskraft aus dem Vorratsbehälter (2) durch die Behältermündung (6) auf den Kanalboden (7) des Sammelkanals (4) fließt.

12. Verfahren nach Anspruch 10 oder 11,
**dadurch gekennzeichnet, dass** die Dosierung des Pulvers (1) durch Steuerung oder Regelung unter Einbeziehung eines Sensors (24) zur Massenerfassung des austretenden Pulvers (1) erfolgt, wobei der Sensor (24) im Fließweg des mittels des pulsierenden Druckes (p) fluidisierten Pulvers (1), insbesondere in einem Austrittskanal (12) des Sammelkanals (4) angeordnet ist.

13. Verfahren nach Anspruch 12,
**dadurch gekennzeichnet, dass** die Dosierung des Pulvers (1) durch Steuerung oder Regelung einer Einwirkzeit (t) des pulsierenden Druckes (p) erfolgt.

14. Verfahren nach Anspruch 12 oder 13,
**dadurch gekennzeichnet, dass** die Dosierung des Pulvers (1) durch Steuerung oder Regelung einer Anzahl von Amplituden (a) des pulsierenden Druckes (p) erfolgt.

## Claims

1. Metering device for a powder (1), comprising a reservoir (2) for the powder (1) and a collector channel (4) located below the reservoir (2) in the weight force direction (3) and extending along a longitudinal axis (5), wherein the reservoir (2) terminates into the collector channel (4) by means of a reservoir mouth (6) in such a way that an unimpeded through-passage is formed for the powder (1) from the reservoir (2) to the collector channel (4), wherein the longitudinal axis (5) of the collector channel (4) extends transversely to the weight force direction (3), wherein the collector channel (4) has a channel base (7) below the reservoir mouth (6) in the weight force direction (3), wherein the collector channel (4) has a discharge opening (8) for a metered sub-quantity of the powder (1), wherein the discharge opening (8) is laterally offset relative to the reservoir mouth (6) in the direction of the longitudinal axis (5) of the collector channel (4), and wherein means are provided for applying a pulsating pressure (p) to the collector channel (4),
**characterised in that** an atmospheric pressure (po) is applied to the discharge opening (8), and **in that** the means for pressurisation are designed such that the pulsating pressure (p) oscillates between a pressure maximum (pₘₐₓ) and a pressure minimum (pₘᵢₙ), the pressure maximum (pₘₐₓ) being above the atmospheric pressure (po) and the pressure minimum (pₘᵢₙ) being below the atmospheric pressure (po).

2. Metering device according to claim 1,
**characterised in that** the means for pressurisation are designed such that a medium pressure (pₘ) of the pulsating pressure (p) is equal to the atmospheric pressure (po).

3. Metering device according to claim 1,
**characterised in that** the means for pressurisation are designed such that a medium pressure (pₘ) of the pulsating pressure (p) is above the atmospheric pressure (po).

4. Metering device according to any of claims 1 to 3,
**characterised in that** air is applied to the collector channel (4) under the influence of the pulsating pressure (p).

5. Metering device according to any of claims 1 to 3,
**characterised in that** a technical gas, in particular an inert gas, is applied to the collector channel (4) under the influence of the pulsating pressure (p).

6. Metering device according to any of claims 1 to 5,
**characterised in that** the longitudinal axis (5) of the collector channel (4) is inclined towards the horizontal by no more than 30°, preferably by no more than 15°, and is in particular oriented at least approximately horizontally.

7. Metering device according to any of claims 1 to 6,
**characterised in that** the collector channel (4) has a pressure port (9) for the infeed of the pulsating pressure (p), wherein a powder barrier (10), in particular in the form of a sieve, a filter or the like, is located between the reservoir mouth (6) and the pressure port (9).

8. Metering device according to any of claims 1 to 7,
**characterised in that** a sensor (24) for detecting the mass of the discharging powder (1) is located in the flow path of the powder (1) fluidised by means of the pulsating pressure (p), in particular in an outlet channel (12) of the collector channel (4).

9. Metering device according to claim 8,
**characterised in that** the sensor (24) is combined with the means for the pressurisation of the collector channel (4) to form a control circuit for adjusting the metering quantity of the powder (1) to a target value.

10. Method for operating a metering device according to any of claims 1 to 9 for metering powder (1), comprising the following process steps:
- a sub-quantity of the powder (1) is conveyed from the reservoir (2) through the reservoir mouth (6) to the channel base (7) of the collector channel (4);
- an atmospheric pressure (po) is applied to the discharge opening (8) and a pulsating pressure (p) is applied to the collector channel (4), wherein the pulsating pressure (p) in the collector channel (4) oscillates between a pressure maximum (pₘₐₓ) and a pressure minimum (pₘᵢₙ), the pressure maximum (pₘₐₓ) being above the atmospheric pressure (p₀) and the pressure minimum (pₘᵢₙ) being below the atmospheric pressure (p₀);
- at least the sub-quantity of the powder (1) which lies on the channel base (7) of the collector channel (4) is fluidised by means of the pulsating pressure (p);
- the powder (1) fluidised under the influence of the pulsating pressure (p) flows along the channel base (7) to the discharge opening (8) and there emerges from the collector channel (4);
- the pulsating pressure (p) is switched off as soon as a desired quantity of the powder (1) has emerged from the discharge opening (8), being metered thereby.

11. Method according to claim 10,
**characterised in that** the powder (1) flows, when the pulsating pressure (p) is switched off, from the reservoir (2) through the reservoir mouth (6) to the channel base (7) of the collector channel (4), in particular owing to its weight force only.

12. Method according to claim 10 or 11,
**characterised in that** the powder (1) is metered by open- or closed-loop control involving a sensor (24) for detecting the mass of the discharging powder (1), the sensor (24) being located in the flow path of the powder (1) fluidised by means of the pulsating pressure (p), in particular in an outlet channel (12) of the collector channel (4).

13. Method according to claim 12,
**characterised in that** the powder (1) is metered by open- or closed-loop control of an action time (t) of the pulsating pressure (p).

14. Method according to claim 12 or 13,
**characterised in that** the powder (1) is metered by open- or closed-loop control of a number of amplitudes (a) of the pulsating pressure (p).

## Revendications

1. Dispositif de dosage pour une poudre (1), comprenant un réservoir (2) pour la poudre (1) et un conduit collecteur (4) qui est disposé au-dessous du réservoir (2), dans le sens du poids (3), et qui s'étend le long d'un axe longitudinal (5), le réservoir (2) débouchant dans le conduit collecteur (4) à l'aide d'une bouche de réservoir (6) de telle sorte qu'un passage sans obstacle du réservoir (2) jusqu'au conduit collecteur (4) soit formé pour la poudre (1), l'axe longitudinal (5) du conduit collecteur (4) étant transversal par rapport au sens du poids (3), le conduit collecteur (4) comportant au-dessous de la bouche de réservoir (6), dans le sens du poids (3), un fond de conduit (7), le conduit collecteur (4) présentant une ouverture d'évacuation (8) pour une quantité dosée de poudre (1), ladite ouverture d'évacuation (8) étant décalée latéralement par rapport à la bouche de réservoir (6) dans le sens de l'axe longitudinal (5) du conduit collecteur (4), et des moyens étant prévus pour la mise en pression du conduit collecteur (4) avec une pression pulsée (p),
**caractérisé en ce que** l'ouverture d'évacuation (8) est soumise à une pression atmosphérique (P₀), et **en ce que** les moyens de mise en pression sont conçus de telle sorte que la pression pulsée (p) oscille entre un maximum de pression (pₘₐₓ) et un minimum de pression (pₘᵢₙ), le maximum de pression (pₘₐₓ) étant situé au-dessus de la pression atmosphérique (p₀), et le minimum de pression (pₘᵢₙ) étant situé au-dessous de la pression atmosphérique (p₀).

2. Dispositif de dosage selon la revendication 1,
**caractérisé en ce que** les moyens de mise en pression sont conçus de telle sorte qu'une pression moyenne (pₘ) de la pression pulsée (p) est égale à la pression atmosphérique (p₀).

3. Dispositif de dosage selon la revendication 1,
**caractérisé en ce que** les moyens de mise en pression sont conçus de telle sorte qu'une pression moyenne (pₘ) de la pression pulsée (p) est située au-dessus de la pression atmosphérique (p₀).

4. Dispositif de dosage selon l'une des revendications 1 à 3,
**caractérisé en ce que** le conduit collecteur (4) est contraint avec de l'air sous l'action de la pression pulsée (p).

5. Dispositif de dosage selon l'une des revendications 1 à 3,
**caractérisé en ce que** le conduit collecteur (4) est contraint avec un gaz technique, en particulier un gaz inerte, sous l'action de la pression pulsée (p).

6. Dispositif de dosage selon l'une des revendications 1 à 5,
**caractérisé en ce que** l'axe longitudinal (5) du conduit collecteur (4) n'est pas incliné de plus de 30°, de préférence de plus de 15°, par rapport à l'horizontale, et est orienté en particulier au moins approximativement horizontalement.

7. Dispositif de dosage selon l'une des revendications 1 à 6,
**caractérisé en ce que** le conduit collecteur (4) comporte un raccordement de pression (9) pour l'amenée de la pression pulsée (p), une retenue de poudre (10) étant prévue entre la bouche de réservoir (6) et le raccordement de pression (9), en particulier sous la forme d'un tamis, d'un filtre ou autre.

8. Dispositif de dosage selon l'une des revendications 1 à 7,
**caractérisé en ce qu'**il est prévu sur la trajectoire d'écoulement de la poudre (1) fluidisée à l'aide de la pression pulsée (p), en particulier dans un conduit de sortie (12) du conduit collecteur (4), un capteur (24) pour la détection de masse de la poudre (1) qui sort.

9. Dispositif de dosage selon la revendication 8,
**caractérisé en ce que** le capteur (24) est relié aux moyens de mise en pression du conduit collecteur (4), pour former un circuit de régulation qui règle la quantité dosée de la poudre (1) à une valeur cible.

10. Procédé pour le fonctionnement d'un dispositif de dosage selon l'une des revendications 1 à 9 pour le dosage de poudre (1), comprenant les étapes de procédé suivantes :
- à partir du réservoir (2), une quantité de poudre (1) est amenée sur le fond (7) du conduit collecteur (4) par la bouche de réservoir (6) ;
- l'ouverture d'évacuation (8) est soumise à une pression atmosphérique (P₀), et le conduit collecteur (4) à une pression pulsée (p), la pression pulsée (p) dans le conduit collecteur (4) oscillant entre un maximum de pression (pₘₐₓ) et un minimum de pression (pₘᵢₙ), le maximum de pression (pₘₐₓ) étant situé au-dessus de la pression atmosphérique (p₀), et le minimum de pression (pₘᵢₙ) étant situé au-dessous de la pression atmosphérique (p₀) ;
- au moins la quantité de poudre (1) qui se trouve sur le fond (7) du conduit collecteur (4) est fluidisée à l'aide de la pression pulsée (p) ;
- la poudre (1) fluidisée à l'aide de la pression pulsée (p) s'écoule le long du fond de conduit (7) jusqu'à l'ouverture d'évacuation (8), où elle sort du conduit collecteur (4) ;
- la pression pulsée (p) est arrêtée dès qu'une quantité voulue de poudre (1) est sortie par l'ouverture d'évacuation (8) et est ainsi dosée.

11. Procédé selon la revendication 10,
**caractérisé en ce que** la poudre (1), quand la pression pulsée (p) est arrêtée, sort du réservoir (2) par la bouche de réservoir (6) en particulier par son seul poids, et arrive sur le fond (7) du conduit collecteur (4).

12. Procédé selon la revendication 10 ou 11,
**caractérisé en ce que** le dosage de la poudre (1) se fait par commande ou régulation, à l'aide d'un capteur (24) pour la détection de masse de la poudre (1) qui sort, le capteur (24) étant disposé sur la trajectoire d'écoulement de la poudre (1) fluidisée à l'aide de la pression pulsée (p), en particulier dans un conduit de sortie (12) du conduit collecteur (4).

13. Procédé selon la revendication 12,
**caractérisé en ce que** le dosage de la poudre (1) se fait grâce à la commande ou la régulation d'un temps d'action (t) de la pression pulsée (p).

14. Procédé selon la revendication 12 ou 13,
**caractérisé en ce que** le dosage de la poudre (1) se fait grâce à la commande ou la régulation d'un nombre d'amplitudes (a) de la pression pulsée (p).
